# EUROPEAN PATENT APPLICATION

(11) **EP 1 602 301 A1**
(43) Date of publication of application: **07.12.2005**
(21) Application number: 05104719.9
(22) Date of filing: 01.06.2005
(51) Int. Cl.: A47B 91/06, B32B 5/06, B32B 5/26

(54) **Textile glide provided with low friction material**

(30) Priority: 01.06.2004 US 575399 P
(71) Applicant: Soleno Inc., Laval, Québec H7L 3Z1 (CA)
(72) Inventor: Poirier, Alain, St-Jean-sur-Richelieu (Québec), J2W 2Y2 (CA)
(74) Representative: Schmit, Christian Norbert Marie

(57) **Abstract**

A textile glide comprises a layer of fiber material having first and second opposite generally flat faces. Low friction material is integrated with the layer of fiber material so as to have a friction reducing effect on at least one of the first and second faces.

## Description

### FIELD OF THE INVENTION

The present invention generally relates to glides, in particular but not exclusively floor glides for furniture and other heavy objects and glides for the protection of small objects such as trinkets displayed on a supporting surface. More specifically, the present invention relates to a sheet of textile material to which a low friction material is integrated.

### BACKGROUND OF THE INVENTION

Moving large and heavy objects such as furniture may be difficult in many cases. Usually, the weight of a heavy object generates a large friction force between the object and the floor it is resting on, making the movements of the object difficult and prone to cause undesirable marks on the floor.

Also, small ornamental objects such as, for example, fragile porcelain trinkets displayed on a supporting surface such as a shelf need protection.

In view of the above, there is a need to provide a new material, at low cost, which is easy to install and which is efficient in both reducing the friction between an object to be moved and the floor and in protecting small fragile trinkets.

### SUMMARY OF THE INVENTION

More specifically, the present invention relates to a glide comprising a layer of textile material having first and second opposite generally flat faces, and low friction material integrated to at least one of said first and second faces.

It is to be noted that the term "integration" is to be construed, herein and in the appended claim as any combination of elements that enable all the elements to be present on the face of the combination. For example, the integration of a low friction material to a layer of textile material makes it possible to have both the textile fibers and the low friction material present at least on one face of the textile layer.

The foregoing and other objects, advantages and features of the present invention will become more apparent upon reading of the following non-restrictive description of an illustrative embodiment thereof, given by way of example only with reference to the accompanying drawings.

### BRIEF DESCRIPTION OF THE DRAWINGS

In the appended drawings:

Figure 1 is a perspective view showing a non-woven synthetic textile sheet constructed in accordance with a first non-restrictive illustrative embodiment of the present invention;

Figure 2 is a sectional view taken along section lines II-II of Figure 1 but showing only a fragmented portion thereof;

Figure 3 is a perspective view showing the non-woven synthetic textile sheet according to an embodiment of the present invention as supplied in strip form and provided with an adhesive layer;

Figure 4 is a schematic side elevation view of a needle punching machine;

Figure 5 is a side elevation view showing a non-woven synthetic textile sheet constructed in accordance with a second non-restrictive illustrative embodiment of the present invention; and

Figure 6 is a side elevation view showing a non-woven synthetic textile sheet constructed in accordance with a third non-restrictive illustrative embodiment of the present invention.

### DETAILED DESCRIPTION OF THE ILLUSTRATIVE EMBODIMENT

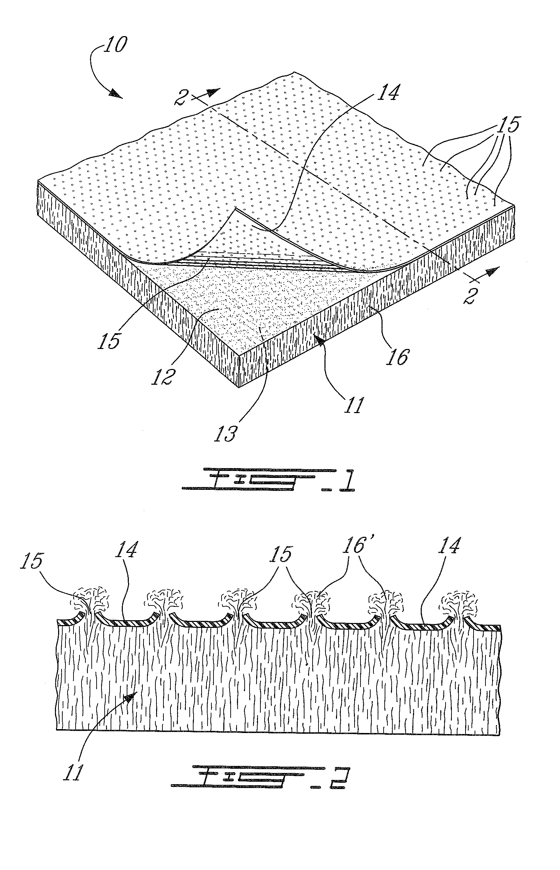

Referring now to Figure 1 of the appended drawings, there is shown generally at 10 a sheet of textile glide according to a first non-restrictive, illustrative embodiment of the present invention.

The sheet 10 includes a layer 11 of felt or mat and a layer of low friction material which, in the non-restrictive illustrative embodiment, is in the form of a Teflon™ coating 14.

### Layer 11

The layer 11 has a substantially uniform thickness of synthetic or natural fibers 16 and defines opposite bottom 12 and top 13 faces.

The non-woven synthetic fiber layer 11 can be constituted of any synthetic or natural fibers, for example polypropylene and/or polyester fibers.

The non-woven synthetic sheet material as herein described, may be fabricated by a standard process wherein polypropylene or polyester fibers of substantially equal length or variable lengths are introduced in the form of a fiber mat in a sheet forming machine wherein the fibers are deposited to form a fiber layer of a predetermined thickness and density. As a non-limitative example, the fibers may have lengths of ½ to 6 inches and a size between 0.5 and 20 deniers. At the outlet of the machine the fiber mat is subjected to a needle punching process and this may be made through a plurality of needle rolls. The thickness of the layer 11 of synthetic fibers 16 is maintained homogeneous by this needle punching, not shown herein but well known to those of ordinary skill in the art, whereby the fibers intertwine together to maintain a homogeneous consistency. In this manner, the fiber layer 11 may be formed to be very pliable.

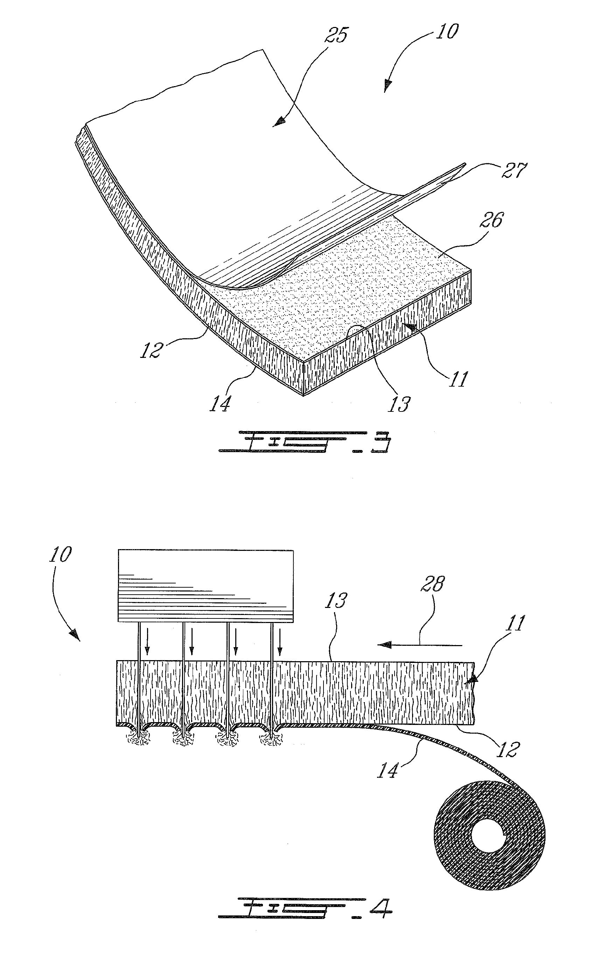

For example, the fiber layer 11 as shown in Figures 1 and 2 may have a thickness in the range of from about 0.2 mm to 25 mm, and its weight can vary between 50 g/m² to 2000 g/m² but advantageously within the range of about 100 to 1500 g/m².

### Low friction layer

According to the illustrative embodiment, a Teflon™ coating 14, non-limitatively shown in Figure 1-3 as a Teflon™ film, is provided on the bottom face 12, for example by means of a further needle punch step whereby some of the fibers 16', as shown in Figure 2, protrude through the orifices 15 formed in the Teflon™ film by the needle punching to thereby interconnect the fibers 16' with the Teflon™ film.

During this further needle punch step, the sheet 10 becomes more rigid due to the fact that fibers in the bottom portion of the fiber layer 11 are caused to rise through the orifices formed in the Teflon™ film to cause the film to be interconnected with this bottom portion of the layer 11.

### Adhesive layer

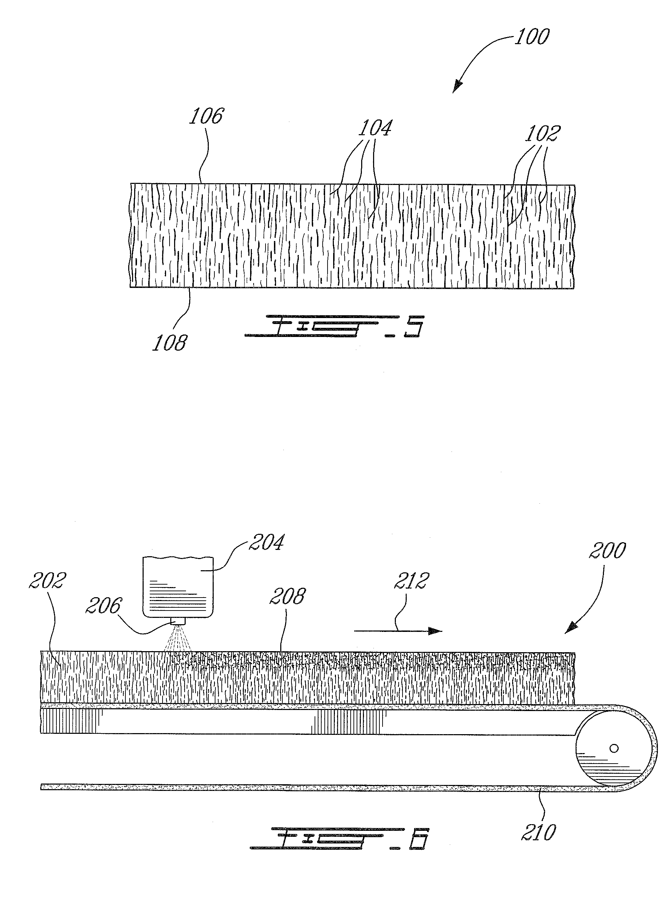

As shown in Figure 3, the top face 13 of the fiber layer 11 may be provided with an adhesive layer shown as a double adhesive tape 25 having an adhesive substrate 26 and a release sheet 27. Obviously, in some instances, the use of the glide is made easier by the provision of the adhesive layer 26.

The cutting of the sheet 10 can be done with scissors normally used for cutting carpeting or a sharp knife as is well known in the art. The cut portion of the sheet 10 can then be simply applied and adhered to a surface after having removed the release sheet 27.

Figure 4 schematically illustrates the needle punching process that is used to join the low friction layer 14 to the felt layer 11. As can be seen from this figure, the low friction Teflon™ film is unrolled and brought into contact with the bottom face 12 before being needle punched through via the top face 13. Once punched, the sheet 10 may be advanced (see arrow 28).

Turning now to Figure 5 of the appended drawings, a sheet of textile glide 100 according to a second non-limitative illustrative embodiment will be described.

Contrary to the sheet 10 illustrated in Figures 1 to 3, the sheet 100 does not have a separate low friction layer. The low friction material is otherwise integrated with the layer of felt or mat. More specifically, fibers 102 of low friction material are mixed with the synthetic fibers 104 of the felt or mat before the forming of the sheet 100. Accordingly, both faces 106 and 108 have low friction material fibers exposed.

The proportion of low friction material fibers in the sheet 100 may vary from about 0.5% to 100%.

Of course, an adhesive layer (not shown) can be secured to one of the faces 106 and 108.

Figure 6 of the appended drawings illustrates a sheet of textile glide 200 according to a third non-limitative illustrative embodiment while it is being made.

The sheet 200 is a felt mat 202 to which is integrated a Teflon™ -based solution. The solution is contained in a vessel 204 and sprayed, via a nozzle 206, onto the bottom face 208 of the felt mat 202. The felt mat 202 is supported by a conveyor 210 and moved at a predetermined speed (see arrow 212) thereby to spray the solution as a continuous process.

As can be seen from this figure, the solution penetrates and is thus integrated with the felt mat 202 to yield the textile glide sheet 200. The degree of penetration of the solution into the felt mat depends on many variables, such as, for example, the viscosity of the solution, the density of the mat, the flow rate of the solution, the speed of the conveyor.

Although the Teflon™ coating has been described hereinabove as being a Teflon™ film that is mounted to the fiber layer by needle punching, a Teflon™ solution that is sprayed onto a face of a felt mat or Teflon™ fibers that are meshed with the fiber layers, other types of low friction material integration could be used. For example, a Teflon™ film could be thermoformed, laminated, heat-sealed or die-stamped onto the bottom face of the fiber layer; Teflon™ resin could be applied to the bottom face 12 of the fiber layer 11 and allowed to cure; Teflon™ fibers could form a distinct low friction mat that could be adhered or otherwise affixed to the bottom face of the fiber layer. Another possibility would be to manufacture a non-woven fiber layer where the fibers used are Teflon™ fibers.

Of course, any other suitable low friction material having adequate friction reducing properties could be used to replace Teflon™. An example of such a material is UHMW (Ultra High Molecular Weight).

As will easily be understood by those of ordinary skill in the art, while the textile glide has been illustrated herein in sheet form, readily usable glides shapes such as circles of varying diameters could be made. One possible method is to punch-out these shapes from a sheet of the material described hereinabove.

Although the present invention has been described hereinabove by way of an illustrative embodiment thereof, it can be modified at will, within the scope of the appended claims, without departing from the spirit and nature of the subject invention.

## Claims

1. A glide comprising a layer of textile material having first and second opposite generally flat faces, and low friction material integrated to at least one of said first and second faces.

2. A glide as recited in claim 1, wherein the low friction material includes Teflon™.

3. A glide as recited in claim 1, wherein the low friction material includes UHMW.

4. A glide as recited in claim 1, further comprising an adhesive layer provided on the other one of said first and second faces.

5. A glide as recited in claim 1, wherein said textile material layer includes fibers.

6. A glide as recited in claim 5, wherein said fibers of said textile material fibers are non-woven.

7. A glide as recited in claim 5, wherein said fibers of said textile material layer are low-friction material fibers.

8. A glide as recited in claim 5, wherein said low friction material includes low friction material fibers that are mixed with the fibers of the textile material layer.

9. A glide as recited in claim 1, wherein said low friction material includes a low friction film that is integrated to said textile material layer via a needle punching process.

10. A glide as recited in claim 1, wherein said low friction material includes a low friction material based solution that is integrated to said textile material layer via a spraying process.

11. A glide as recited in claim 1, wherein said low friction material includes a low friction film that is secured to one of said first and second faces of said textile material layer using a process selected from the group consisting of thermoforming, laminating, heat-sealing and die-stamping.

12. A glide as recited in claim 1, wherein said low friction material includes a low friction material based resin that is applied to one of said first and second faces of said textile material layer and allowed to cure.

13. A glide as recited in claim 1, wherein said low friction material includes low friction fibers that are arranged into a mat that is secured to one of said first and second faces of said textile material layer.

14. A glide as recited in claim 13, wherein said mat of low friction material fibers is secured to one of said first and second faces of said textile material layer via an adhesive.
